# EUROPÄISCHE PATENTSCHRIFT

(11) **EP 2 814 589 B1**
(45) Veröffentlichungstag und Bekanntmachung des Hinweises auf die Patenterteilung: **27.06.2018**
(21) Anmeldenummer: 13700126.9
(22) Anmeldetag: 09.01.2013
(51) Int. Cl.: B01D 29/11

(54) **VERFAHREN ZUR HERSTELLUNG EINES FILTERELEMENTS**
METHOD FOR PRODUCING A FILTER ELEMENT
PROCÉDÉ DE FABRICATION D'UN ÉLÉMENT FILTRANT

(30) Priorität: 16.02.2012 DE 102012003145
(43) Veröffentlichungstag der Anmeldung: 24.12.2014
(73) Patentinhaber: Hydac Filtertechnik GmbH, 66280 Sulzbach/Saar (DE)
(72) Erfinder: MEES, Harald, 66822 Lebach (DE); GALIFI, Giuseppe, 66386 St. Ingbert (DE)
(74) Vertreter: Bartels und Partner, Patentanwälte
(86) Internationale Anmeldenummer: PCT/EP2013/000031
(87) Internationale Veröffentlichungsnummer: WO 2013/120568

(56) Entgegenhaltungen:
- EP-A1- 1 695 751
- DE-A1-102006 028 116
- DE-A1-102010 005 541
- US-A1- 2010 025 318

## Beschreibung

Die Erfindung betrifft ein Verfahren zur Herstellung eines Filterelements, wobei mindestens eine der miteinander zu verbindenden Teilkomponenten aus einem strahlungsdurchlässigen Material ausgebildet ist und mittels einer Strahlung zumindest teilweise durchstrahlt wird, wobei mindestens eine elektrisch leitfähige, thermoplastische Zwischenlage zwischen den miteinander zu verbindenden Teilkomponenten angeordnet wird und wobei durch Absorption der Strahlung zumindest in der jeweiligen Zwischenlage eine Materialschmelzung erreicht wird und die jeweiligen Teilkomponenten nach einer Materialerkaltung fest miteinander verbunden sind.

Filterelemente kommen auf vielen Gebieten der Technik für die Filtration von strömungsfähigen Medien, wie Hydraulikflüssigkeiten, Schmierstoffen, Kraftstoffen und dergleichen zum Einsatz. Solche Filterelemente werden aus Gründen der rationellen Fertigung, zur Erzielung eines geringen Gewichts und der einfachen Entsorgung und Wiederverwertung vorzugsweise aus metallfreien Komponenten aufgebaut, wobei ein Filtermedium, das regelmäßig einen bei der Filtration die Reinseite bildenden, inneren Filterraum umgibt, von dem zu reinigenden strömungsfähigen Medium von außen nach innen durchströmt wird. Üblicherweise ist der Filterraum an axialen Enden des Filterelements durch jeweils eine Endkappe abgeschlossen. Wesentliche Bauteile eines derartigen Filterelements, wie die genannten Endkappen oder auch ein Stützrohr oder eine das Filtermedium nach außen abschließende Hülle, sind typischerweise als Spritzgussformteile oder auch als Composite-Bauteile mittels Spritzgussformverfahren oder Laminierverfahren gebildet und werden mittels Klebeverfahren oder auch Laser-Durchstrahl-Schweißverfahren miteinander verbunden.

Bei einem aus WO 2008/113399 A1 bekannten Verfahren zur Herstellung eines Filterelements wird zwischen einem Filtermedium als erster Teilkomponente, die einen inneren Filterhohlraum umgibt und ein heißsiegelbares Material enthält, und einer einen Abschluss des Filterhohlraums an zumindest einem Ende bildenden Endkappe als zweiter Teilkomponente aus thermoplastischem, laserstrahlungsdurchlässigem Material eine laserstrahlungsundurchlässige Sperrschicht ausgebildet. Beim Verschweißen von Endkappe und Filtermedium wird an die Sperrschicht angrenzendes laserstrahlungsdurchlässiges Material mit Laserstrahlung bzw. Laserenergie derart durchstrahlt, dass durch Erhitzen eines an die Sperrschicht angrenzenden Bereichs der zweiten Teilkomponente oder der Sperrschicht selbst thermoplastisches Material aufgeschmolzen wird und als Fügeelement nach dem Erkalten die Schweißverbindung bildet.

Die US 2010/0025318 A1 zeigt ein Filterelement mit einer Endkappe, die stirnseitig an ein rohrförmiges Filtermedium geklebt ist und flexible Kontakte aufweist, die in einen angrenzenden Einbauraum für eine elektrisch leitfähige Pumpenschale ragend angeordnet sind. Die flexiblen Kontakte liegen nach dem Einsetzen der Pumpenschale in den Einbauraum an dieser Pumpenschale elektrisch kontaktierend an.

DE 10 2010 005 541 A1 offenbart ein aus einzelnen Teilkomponenten, wie einem Filtermedium, zusammengesetztes Filterelement. Die Teilkomponenten des bekannten Filterelements werden in einem Durchstrahl-Schweißverfahren mittels Laserlicht miteinander verbunden. Hierfür ist mindestens eine der Teilkomponenten aus einem zumindest teilweise laserlichtdurchlässigem Material ausgebildet und mindestens eine in der Art einer Sperrschicht ausgebildete Zwischenlage aus einem zumindest teilweise laserlichtundurchlässigem Material vorgesehen. Einige der Teilkomponenten des bekannten Filterelements, die beim Durchstrahl-Schweißverfahren dem Laserlicht exponiert sind, sind zumindest teilweise elektrisch leitfähig, wobei die Sperrschicht zumindest teilweise elektrisch leitfähig sein kann.

Die bekannten Laser-Durchstrahl-Schweißverfahren erfordern neben einer laserstrahlungsdurchlässigen, anders ausgedrückt lasertransparenten, Teilkomponente eine laserstrahlungsundurchlässige, anders ausgedrückt laserabsorbierende, Teilkomponente. Zur Verbindung von Teilkomponenten aus Materialien mit gleichen oder ähnlichen optischen Eigenschaften wird als Absorber eine Zwischenfolie aus einem Schweißzusatzwerkstoff, wie die oben genannte Sperrschicht, zwischen die zu verbindenden Teilkomponenten eingebracht. Neben zusätzlichen Arbeitsschritten zur Einbringung eines Absorbers sind mitunter kostenintensive Additive oder Oberflächenbeschichtungen der zu verbindenden Teilkomponenten erforderlich. Die zum Erreichen einer Leitfähigkeit der jeweiligen Teilkomponente bzw. der jeweiligen Zwischenlage zugesetzten Additive, wie Rußpartikel oder Carbon-Nano-Tubes, absorbieren mitunter das Laserlicht in einer derartigen Weise, dass ein Laser-Durchstrahl-Schweißverfahren nur eingeschränkt eingesetzt werden kann.

Die Erfindung stellt sich die Aufgabe, mit vergleichsweise einfachen und wenigen Schritten elektrisch leitfähige Teilkomponenten eines Filterelements mittels einer Strahlung miteinander zu verbinden.

Diese Aufgabe wird gelöst durch ein Verfahren mit den Merkmalen von Patentanspruch 1 in seiner Gesamtheit. Das erfindungsgemäße Verfahren zeichnet sich dadurch aus, dass die jeweilige Zwischenlage derart in einen angrenzenden Einbauraum für eine weitere elektrisch leitfähige Teilkomponente ragend angeordnet wird, dass die jeweilige Zwischenlage nach dem Einsetzen der weiteren Teilkomponente in den Einbauraum an dieser elektrisch kontaktierend anliegt. Erfindungsgemäß bildet der in den Einbauraum ragende, zweckmäßigerweise umformbare Teil der jeweiligen Zwischenlage bzw. der jeweiligen Teilkomponente einen elektrischen Kontakt bzw. elektrische Kontaktbereiche, wodurch an die Zwischenlage bzw. die jeweilige Teilkomponente angrenzende, elektrisch leitfähige Teilkomponenten des Filterelements elektrisch miteinander verbindbar bzw. verbunden sind.

Im Gegensatz zu den bekannten Verfahren sind bei dem erfindungsgemäßen Verfahren keine Einschränkungen der Materialwahl für die jeweilige Zwischenlage aufgrund eines erforderten Strahlungsdurchlasses gegeben. Die Strahlung kann in mindestens einem Aufschmelzbereich der mindestens einen Teilkomponente derart fokussiert sein, dass durch Materialschmelzung zumindest im jeweiligen Aufschmelzbereich die Teilkomponenten nach ihrem Erkalten fest miteinander verbunden sind.

In einer vorteilhaften Variante des erfindungsgemäßen Verfahrens ist die jeweilige Zwischenlage folienartig ausgebildet. Alternativ oder zusätzlich ist an der jeweiligen Zwischenlage mindestens ein vorzugsweise lippenartiger Kontaktbereich ausgebildet zur vorzugsweise regelmäßigen Anlage an der weiteren Teilkomponente. Ein lippenartiger Kontaktbereich lässt sich beim Einsetzen der weiteren Teilkomponente in einfacher Weise umformen und liegt flächig an der weiteren Teilkomponente an.

Weiter ist es vorteilhaft, dass nach dem Einsetzen der weiteren Teilkomponente in den Einbauraum diese mit der jeweiligen Zwischenlage bzw. der jeweiligen Teilkomponente, insbesondere mit dem mindestens einen Kontaktbereich, thermoverschweißt wird. Auf diese Weise können mehrere elektrisch leitfähige Teilkomponenten eines Filterelements sowohl ortsfest zueinander fixiert werden als auch elektrisch miteinander verbunden werden.

Typischerweise wird eine Laserstrahlung mit einer Wellenlänge bevorzugt in einem Wellenlängenbereich von 400nm bis 2000nm eingesetzt. Die Laserstrahlung bzw. die Laserstrahlen weisen typischerweise ein Gauß'sches Strahlenprofil auf. Durch eine geeignete Wahl der Laserstrahlung, ihrer Aufteilung und Fokussierung bzw. Überlagerung in Anlagebereichen der zu verbindenden Teilkomponenten können Teilkomponenten aus Materialien mit ähnlichen oder gleichen optischen Eigenschaften, insbesondere aus dem gleichen Material, in einfacher Weise fest miteinander verbunden bzw. verschweißt werden. Weiter ist es vorteilhaft, die Teilkomponenten im jeweiligen Anlage- bzw. Verbindungsbereich mittels einer gepulsten Strahlung miteinander zu verschweißen. Die Intensität und die Länge eines oder mehrerer Strahlungspulse, wie Laserpulse, werden entsprechend dem zur Aufschmelzung entsprechenden Materialbereiche erforderlichen Energieeintrag gewählt.

Die zur bereichsweisen Aufschmelzung des Materials der jeweiligen Zwischenlage bzw. Teilkomponente erforderliche Energie wird zweckmäßigerweise dadurch eingebracht, dass die Strahlung auf den jeweiligen Anlagepunkt, die jeweilige Anlagelinie bzw. die jeweilige Anlagefläche konzentriert bzw. fokussiert wird. Vor Eintritt in die jeweilige Zwischenlage bzw. den jeweiligen Aufschmelzbereich kann die Strahlung in mehrere, typischerweise zwei, Strahlen geringerer Strahlintensität geteilt werden, die sich im Bereich der Zwischenlage bzw. im Aufschmelzbereich der jeweiligen Teilkomponente zur Gesamtstrahlung gewünschter Strahlungsform und Strahl intensität konstruktiv überlagern.

Vorteilhafterweise ist die Wellenlänge der Strahlung in Abhängigkeit vom Absorptionsvermögen des jeweiligen Materials der Zwischenlage bzw. der Teilkomponente derart gewählt, dass eine zumindest teilweise Absorption der Strahlung durch die jeweilige Zwischenlage bzw. vorzugsweise beide miteinander zu verbindende Teilkomponenten erfolgt. Der Absorptionskoeffizient für die ausgewählte Wellenlänge der Strahlung beträgt vorzugsweise zwischen 5% und 40%, besonders bevorzugt zwischen 10% und 20%. Das Verhältnis von Strahlung und Absorptionsvermögen ist derart gewählt, dass der Eintritt von Strahlung bzw. Strahlen an einer Außenoberfläche der strahlungsdurchlässigen Teilkomponente dort keinen Schmelzeffekt bewirkt, da die eingebrachte Energie als Wärme in angrenzende, nicht von der Strahlung bzw. vom jeweiligen Strahl beaufschlagte Materialbereiche abgeleitet wird. In Bereichen höherer Strahlintensität, die aufgrund der Fokussierung der Strahlung bzw. der Strahlen an der jeweiligen Zwischenlage bzw. im jeweiligen Aufschmelzbereich, insbesondere an der punkt-, linien- oder flächenförmigen Anlage der jeweiligen benachbarten Teilkomponenten, auftreten, kommt es zu einem Wärmestau und infolgedessen zu einer thermischen Aufschmelzung des Materials zumindest im jeweiligen Aufschmelzbereich bzw. an der jeweiligen Zwischenlage.

Bevorzugt ist die jeweilige Zwischenlage und/oder die im jeweiligen Aufschmelzbereich aufgeschmolzene Teilkomponente aus einem Kunststoffmaterial ausgebildet. Es ist jedoch besonders vorteilhaft, jede der Teilkomponenten aus einem Kunststoffmaterial auszubilden, was eine Recyclingfähigkeit optimalerweise des gesamten Filterelements ermöglicht. Weiter können dem Kunststoffmaterial anforderungsgerecht Additive, wie Carbon-Nano-Tubes, Karbonfasern und/oder Metallfasern, zugesetzt sein. Auf diese Weise können gewünschte elektrische Leitfähigkeitswerte für die jeweilige Zwischenlage und/oder die jeweilige Teilkomponente vorgegeben werden.

Die miteinander zu verbindenden Teilkomponenten können eine Endkappe, ein Filtermedium, ein Stützrohr oder Teile derselben sein. Typischerweise ist eine Zwischenlage zwischen dem Stützrohr mit dem darumgelegten Filtermedium und einem Teil der Endkappe angeordnet, wobei die Zwischenlage in einem vorzugsweise zylinderförmigen Einbauraum für eine vorzugsweise rohrstutzenartige weitere Teilkomponente ragt.

Die Erfindung betrifft weiter ein Filterelement umfassend mehrere miteinander verbundene Teilkomponenten, von denen mindestens eine aus einem strahlungsdurchlässigen Material ausgebildet ist, mindestens eine elektrisch leitfähige, thermoplastische Zwischenlage zwischen den miteinander verbundenen Teilkomponenten, wobei die jeweiligen Teilkomponenten über die jeweilige Zwischenlage miteinander verbunden sind. Materialschlüssig meint eine Materialschmelzung und anschließende Materialerkaltung, wodurch die jeweiligen benachbarten Teilkomponenten fest miteinander verbunden sind. Ein erfindungsgemäßes Filterelement ist dadurch gekennzeichnet, dass die jeweilige Zwischenlage in einen angrenzenden Einbauraum für eine weitere elektrisch leitfähige Teilkomponente ragend angeordnet ist zur Anlage an die weitere Teilkomponente.

In einer bevorzugten Ausführungsform des erfindungsgemäßen Filterelements ist die weitere Teilkomponente in den Einbauraum eingesetzt und die jeweilige Zwischenlage liegt elektrisch kontaktierend an der weiteren Teilkomponente an. Hierfür ist vorteilhafterweise an der jeweiligen Zwischenlage mindestens ein vorzugsweise lippenartiger Kontaktbereich ausgebildet zur vorzugsweise regelmäßigen Anlage an der weiteren Teilkomponente. Die jeweilige Zwischenlage kann folienartig ausgebildet sein.

Weitere Vorteile und Merkmale der Erfindung ergeben sich aus den Figuren und der nachfolgenden Beschreibung der Zeichnung. Die vorstehend genannten und die weiter angeführten Merkmale können erfindungsgemäß jeweils einzeln oder in beliebigen Kombinationen miteinander verwirklicht sein. Die in den Figuren gezeigten Merkmale sind rein schematisch und nicht maßstäblich zu verstehen. Es zeigt:

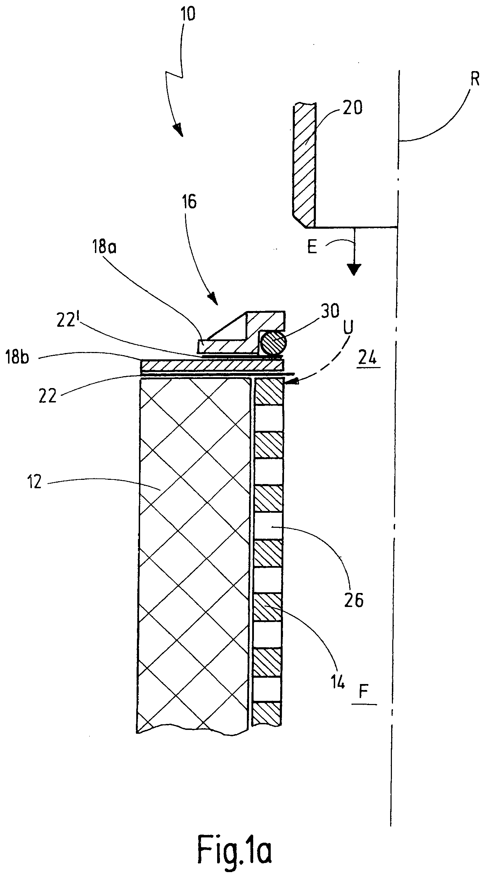

- Fig. 1a: einen Teilschnitt durch ein erfindungsgemäß herge-stelltes Filterelement vor Einsetzen einer weiteren Teil-komponente; und

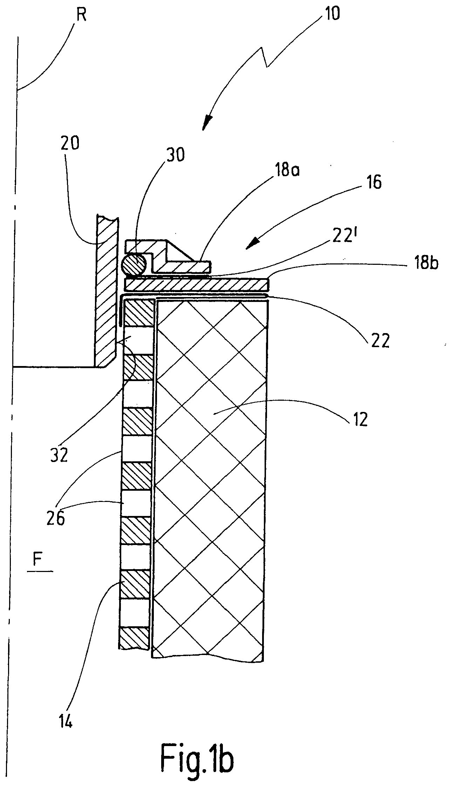

- Fig. 1b: das Filterelement aus Fig. 1a mit eingesetzter weiterer Teilkomponente.

Die Fig. 1a und 1b zeigen zur Veranschaulichung des erfindungsgemäßen Verfahrens ein im Großen und Ganzen zylinderförmiges Filterelement 10, welches als erste Teilkomponente ein Filtermedium 12, als zweite Teilkomponente ein Stützrohr 14, als dritte und vierte Teilkomponenten einen oberen Teil 18a und einen unteren Teil 18b einer Endkappe 16 sowie eine fünfte weitere Teilkomponente 20 umfasst. Sämtliche Teilkomponenten 12-20 des Filterelements 10 sind bevorzugt aus einem Kunststoffmaterial ausgebildet und zumindest teilweise elektrisch leitfähig ausgebildet. Das Kunststoffteil 20 könnte auch aus einem metallischen, insbesondere elektrisch leitenden Werkstoff gebildet sein. An den der Endkappe 16 zugewandten Stirnseiten des Stützrohres 14 und des um das Stützrohr 14 gelegten Filtermediums 12 ist eine folienartige Zwischenlage 22 angeordnet. In SandwichBauweise schließt sich der untere Teil 18b der Endkappe 16 sowie eine weitere Zwischenlage 22' und der obere Teil 18a der Endkappe 16 an.

Bei einer Bestrahlung beispielsweise mit Laserlicht wird das Material der thermoplastischen Zwischenlage 22 aufgeschmolzen; nach der Materialerkaltung verbindet die Zwischenlage 22 als benachbarte Teilkomponente das Filtermedium 12, das Stützrohr 14 und den unteren Teil 18b der Endkappe 16 fest miteinander. In vergleichbarer Weise wird über die weitere Zwischenlage 22' der untere Teil 18b mit dem oberen Teil 18a der Endkappe 16 verbunden. Die Endkappe 16 bzw. deren oberer Teil 18a ist derart ausgebildet, dass ein als Dichtung dienender Ringkörper 30 in eine nutartige Einfassung eingelegt werden kann. Außen am Filtermedium 12 kann eine in den Figuren nicht gezeigte mantelartige Außenhülle vorgesehen sein. Es versteht sich, dass alternativ zur in den Figuren gezeigten oberen Endkappe 16 eine nicht gezeigte untere Endkappe des Filterelements 10 oder beide Endkappenbereiche des Filterelements 10 erfindungsgemäß ausgebildet und zusammengefügt sein können.

Das Filterelement 10 einschließlich der oberen Endkappe 16, dem Filtermedium 12 und dem Stützrohr 14 ist rotationssymmetrisch zur Rotationsachse R ausgebildet. Durch das mit Fluiddurchlässen 26 (nicht sämtliche bezeichnet) versehene Stützrohr 14 ist im Inneren ein zylinderförmiger Fluidraum F festgelegt. An den Fluidraum F schließt sich im Bereich der Endkappe 16 ein Einbauraum 24 für die rohrzylinderförmige weitere Teilkomponente 20 an. Das Filterelement 10 wird von Fluid typischerweise von außen nach innen durchströmt. Beim Durchströmen des Filterelements 10 wird Fluid durch das um das Stützrohr 14 gelegte Filtermedium 12 von Partikeln abgereinigt. Das Filtermedium 12 kann eine plissierte Filtermatte mit aneinanderliegenden Filterfalten umfassen. Durch das Plissieren bzw. Auffalten der Filtermatte wird die im Filterelement 10 wirksame Filterfläche erhöht. Abgereinigtes Fluid verlässt das Filterelement 10 bzw. den Fluidraum F durch einen in der weiteren Teilkomponente 20 ausgebildeten Fluidauslass. Es ist jedoch auch vorstellbar, bei umgekehrter Fluidrichtung einen Fluideinlass in der weiteren Teilkomponente 20 auszubilden.

Zum Einsetzen wird die weitere Teilkomponente 20 in einer Einführbewegung E, welche parallel zur Rotationsachse R gerichtet ist, in den von der oberen Endkappe 16 und dem Stützrohr 14 vorgegebenen Einbauraum 24 eingeführt. Bei dieser Einführbewegung E wird ein in den Einbauraum 24 ragender Kontaktbereich 28 am freien Ende der elektrisch leitfähigen Zwischenlage 22 entsprechend einer Umformbewegung U verformt, anders ausgedrückt umgelenkt, und erreicht die in Fig. 1b gezeigte Stellung. Beim Zusammensetzen sämtlicher Teilkomponenten 12-22 des Filterelements 10, wie in Fig. 1b gezeigt, liegt der Kontaktbereich 28 der Zwischenlage 22 an einer Außenoberfläche 32 der weiteren, elektrisch leitfähigen Teilkomponente 20 an. Auf diese Weise ist eine elektrische Verbindung von der weiteren Teilkomponente 20 über die Zwischenlage 22 zum elektrisch leitfähigen Filtermedium 12 sichergestellt. In den Fig. 1a und 1b ist zu erkennen, dass die Zwischenlage 22 sowohl als Absorber zum Thermoverschweißen benachbarter Teilkomponenten 12, 14, 18b als auch als elektrisches Kontaktelement zwischen dem Filtermedium 12 und der als Gehäusestutzen ausgebildeten weiteren Teilkomponente 20 dient, über die im Filtrationsbetrieb am Filtermedium 12 auftretende elektrische Ladungen abgeleitet werden können.

## Patentansprüche

1. Verfahren zur Herstellung eines Filterelements (10),
- wobei mindestens eine der miteinander zu verbindenden Teilkomponenten (12-18b) aus einem strahlungsdurchlässigen Material ausgebildet ist und mittels einer Strahlung zumindest teilweise durchstrahlt wird,
- wobei mindestens eine elektrisch leitfähige, thermoplastische Zwischenlage (22, 22') zwischen den miteinander zu verbindenden Teilkomponenten (12-18b) angeordnet wird, und
- wobei durch Absorption der Strahlung zumindest in der jeweiligen Zwischenlage (22, 22') eine Materialschmelzung erreicht wird und die jeweiligen Teilkomponenten (12-18b) nach einer Materialerkaltung fest miteinander verbunden sind,
- **dadurch gekennzeichnet, dass** die jeweilige Zwischenlage (22) in einen angrenzenden Einbauraum (24) für eine weitere elektrisch leitfähige Teilkomponente (20) ragend angeordnet wird, und
- dass die jeweilige Zwischenlage (22) nach dem Einsetzen der weiteren Teilkomponente (20) in den Einbauraum (24) an dieser elektrisch kontaktierend anliegt.

2. Verfahren nach Anspruch 1, **dadurch gekennzeichnet, dass** die jeweilige Zwischenlage (22, 22') folienartig ausgebildet ist, und/oder dass an der jeweiligen Zwischenlage (22) mindestens ein vorzugsweise lippenartiger Kontaktbereich (28) ausgebildet ist zur vorzugsweise regelmäßigen Anlage an der weiteren Teilkomponente (20).

3. Verfahren nach Anspruch 1 oder 2, **dadurch gekennzeichnet, dass** nach dem Einsetzen der weiteren Teilkomponente (20) in den Einbauraum (24) diese mit der jeweiligen Zwischenlage (22) bzw. der jeweiligen Teilkomponente, insbesondere dem mindestens einen Kontaktbereich (28), thermoverschweißt wird.

4. Verfahren nach einem der vorhergehenden Ansprüche, **dadurch gekennzeichnet, dass** eine Laserstrahlung mit einer Wellenlänge bevorzugt in einem Wellenlängenbereich von 400nm bis 2000nm und/oder dass eine gepulste Strahlung eingesetzt wird.

5. Verfahren nach einem der vorhergehenden Ansprüche, **dadurch gekennzeichnet, dass** die jeweilige Zwischenlage (22,22') und/oder die jeweilige Teilkomponente jeweils aus einem Kunststoffmaterial ausgebildet ist und/oder mit Additiven, wie Carbon-Nano-Tubes, Karbonfasern oder Metallfasern, versetzt ist.

6. Verfahren nach einem der vorhergehenden Ansprüche, **dadurch gekennzeichnet, dass** die miteinander zu verbindenden Teilkomponenten eine Endkappe (16), ein Filtermedium (12), ein Stützrohr (14) oder Teile (18a, 18b) derselben sind.

7. Verfahren nach Anspruch 6, **dadurch gekennzeichnet, dass** die Zwischenlage (22) zwischen dem Stützrohr (14) mit dem darumgelegten Filtermedium (12) und einem Teil (18b) der Endkappe (16) angeordnet ist und in einen vorzugsweise zylinderförmigen Einbauraum (24) für eine vorzugsweise rohrstutzenartige weitere Teilkomponente (20) ragt.

8. Verfahren nach einem der vorhergehenden Ansprüche, **dadurch gekennzeichnet, dass** mindestens ein thermoplastischer Aufschmelzbereich in mindestens einer elektrisch leitfähigen Teilkomponente (12-18b) der miteinander zu verbindenden Teilkomponenten (12-18b) festgelegt wird, wobei durch Absorption der Strahlung zumindest im jeweiligen Aufschmelzbereich eine Materialschmelzung erreicht wird und die jeweiligen Teilkomponenten (12-18b) nach einer Materialerkaltung fest miteinander verbunden sind.

9. Filterelement (10) umfassend:
- mehrere miteinander verbundene Teilkomponenten (12-18b), von denen mindestens eine aus einem strahlungsdurchlässigen Material ausgebildet ist,
- mindestens eine elektrisch leitfähige, thermoplastische Zwischenlage (22, 22') zwischen den miteinander verbundenen Teilkomponenten (12-18b),
- wobei die jeweiligen Teilkomponenten (12-18b) über die jeweilige Zwischenlage (22, 22') miteinander verbunden sind,
- **dadurch gekennzeichnet, dass** die jeweilige Zwischenlage (22) in einen angrenzenden Einbauraum (24) für eine weitere elektrisch leitfähige Teilkomponente (20) ragend angeordnet ist zur Anlage an die weitere Teilkomponente (20).

10. Filterelement nach Anspruch 9, **dadurch gekennzeichnet, dass** die weitere Teilkomponente (20) in den Einbauraum (24) eingesetzt ist und die jeweilige Zwischenlage (22) bzw. Teilkomponente elektrisch kontaktierend an der weiteren Teilkomponente (20) anliegt.

11. Filterelement nach Anspruch 9 oder 10, **dadurch gekennzeichnet, dass** die jeweilige Zwischenlage (22, 22') folienartig ausgebildet ist, und/oder dass an der jeweiligen Zwischenlage (22) bzw. der jeweiligen Teilkomponente mindestens ein vorzugsweise lippenartiger Kontaktbereich (28) ausgebildet ist zur vorzugsweise regelmäßigen Anlage an der weiteren Teilkomponente (20).

12. Filterelement nach einem der Ansprüche 9 bis 11, **dadurch gekennzeichnet, dass** das Filterelement mindestens einen thermoplastischen Aufschmelzbereich in mindestens einer elektrisch leitfähigen Teilkomponente (12-18b) der miteinander verbundenen Teilkomponenten (12-18b) umfasst, die über den jeweiligen Aufschmelzbereich materialschlüssig miteinander verbunden sind.

## Claims

1. A method for producing a filter element (10),
- at least one of the sub-components (12-18b) to be connected to one another being formed from a radiation-permeable material and being at least partially radiated through by means of radiation,
- at least one electrically conductive, thermoplastic intermediate layer (22, 22') being arranged between the sub-components (12-18b) to be connected to one another, and
- melting of the material being achieved by absorption of the radiation at least in the respective intermediate layer (22, 22'), and the respective sub-components (12-18b) being securely connected to one another after cooling of the material,
- **characterised in that** the respective intermediate layer (22) is arranged protruding into an adjacent installation space (24) for a further electrically conductive sub-component (20), and
- that after the insertion of the further sub-component (20) into the installation space (24), the respective intermediate layer (22) lies against said further sub-component in an electrically contacting manner.

2. The method according to Claim 1, **characterised in that** the respective intermediate layer (22, 22') is formed in the manner of a film and/or that at least one preferably lip-like contact region (28) is formed on the respective intermediate layer (22) so as to preferably lie against the further sub-component (20) regularly.

3. The method according to Claim 1 or 2, **characterised in that** after inserting the further sub-component (20) into the installation space (24), said sub-component is heat-welded to the respective intermediate layer (22) or the respective sub-component, in particular the at least one contact region (28).

4. The method according to any of the preceding claims, **characterised in that** a laser beam with a wavelength preferably in a wavelength range of 400 nm to 2000 nm and/or pulsed radiation is used.

5. The method according to any of the preceding claims, **characterised in that** the respective intermediate layer (22, 22') and/or the respective sub-component is respectively made from a plastic material and/or is displaced by additives such as carbon nanotubes, carbon fibres or metal fibres.

6. The method according to any of the preceding claims, **characterised in that** the sub-components to be connected to one another are an end cap (16), a filter medium (12), a support tube (14) or parts (18a, 18b) of the same.

7. The method according to Claim 6, **characterised in that** the intermediate layer (22) is arranged between the support tube (14) with the filter medium (12) placed around it and a part (18b) of the end cap (16), and protrudes into a preferably cylindrical installation space (24) for a preferably pipe connection-type further sub-component (20).

8. The method according to any of the preceding claims, **characterised in that** at least one thermoplastic melting region is established in at least one electrically conductive sub-component (12-18b) of the sub-components (12-18b) to be connected to one another, melting of the material being achieved at least in the respective melting region by absorption of the radiation and the respective sub-components (12-18b) being connected securely to one another after cooling of the material.

9. A filter element (10) comprising:
- a number of sub-components (12-18b) connected to one another, at least one of which is formed from a radiation-permeable material,
- at least one electrically conductive, thermoplastic intermediate layer (22, 22') between the sub-components (12-18b) connected to one another,
- the respective sub-components (12-18b) being connected to one another by the respective intermediate layer (22, 22'),
- **characterised in that** the respective intermediate layer (22) is arranged protruding into an adjacent installation space (24) for a further electrically conductive sub-component (20) so as to lie against the further sub-component (20).

10. The filter element according to Claim 9, **characterised in that** the further sub-component (20) is inserted into the installation space (24) and the respective intermediate layer (22) or sub-component lies against the further sub-component (20) in an electrically contacting manner.

11. The filter element according to Claim 9 or 10, **characterised in that** the respective intermediate layer (22, 22') is formed in the manner of a film, and/or that at least one preferably lip-like contact region (28) is formed on the respective intermediate layer (22) or the respective sub-component so as to preferably lie against the further sub-component (20) regularly.

12. The filter element according to any of Claims 9 to 11, **characterised in that** the filter element comprises at least one thermoplastic melting region in at least one electrically conductive sub-component (12-18b) of the sub-components (12-18b) connected to one another, which are connected to one another in a material-locking manner by the respective melting region.

## Revendications

1. Procédé de fabrication d'un élément (10) filtrant,
- dans lequel au moins l'un des sous-constituants (12 à 18b) à assembler entre eux est en une matière perméable au rayonnement et est soumis, au moins en partie, à un rayonnement,
- dans lequel on met au moins une couche (22, 22') intermédiaire thermoplastique et conductrice de l'électricité entre les sous-constituants (12 à 18b) à assembler entre eux et
- dans lequel, par absorption du rayonnement, on obtient, au moins dans la couche (22, 22') intermédiaire, une fusion de matière et les sous-constituants (12 à 18b) sont assemblés solidement entre eux après un refroidissement de la matière,
- **caractérisé en ce que** la couche (22) intermédiaire est disposée saillante dans un espace (24) de montage voisin pour un autre sous-constituant (20) conducteur de l'électricité et
- **en ce que** la couche (22) intermédiaire s'applique, après l'insertion de l'autre sous-constituant (20) dans l'espace (24) de montage, à celui-ci avec mise en contact électriquement.

2. Procédé suivant la revendication 1, **caractérisé en ce que** la couche (22, 22') intermédiaire est de type en feuille et/ou **en ce que**, sur la couche (22) intermédiaire, est constituée au moins une région (28) de contact, de préférence de type à lèvre, pour l'application, de préférence régulière, à l'autre sous-constituant (20).

3. Procédé suivant la revendication 1 ou 2, **caractérisé en ce qu'**après l'insertion de l'autre sous-constituant (20) dans l'espace (24) de montage, il est thermosoudé à la couche (22) intermédiaire ou au sous-constituant, notamment à la au moins une région (28) de contact.

4. Procédé suivant l'une des revendications précédentes, **caractérisé en ce que** l'on utilise un rayonnement laser d'une longueur d'onde de préférence dans un domaine de longueur d'onde de 400nm à 2000nm, et/ou un rayonnement pulsé.

5. Procédé suivant l'une des revendications précédentes, **caractérisé en ce que** la couche (22, 22') intermédiaire et/ou le sous-constituant est en une matière plastique et/ou est mélangé à des additifs, comme des nanotubes de carbone, des fibres de carbone ou des fibres métalliques.

6. Procédé suivant l'une des revendications précédentes, **caractérisé en ce que** les sous-constituants à assembler entre eux sont une coiffe (16) d'extrémité, un milieu (12) filtrant, un tube (14) d'appui ou des parties (18a, 18b) de ceux-ci.

7. Procédé suivant la revendication 6, **caractérisé en ce que** la couche (22) intermédiaire est disposée entre le tube (14) d'appui, ayant le milieu (12) filtrant qui l'entoure et une partie (18b) de la coiffe (16) d'extrémité, et pénètre dans un espace (24) de montage, de préférence cylindrique, pour un autre sous-constituant (20), de préférence de type tubulure.

8. Procédé suivant l'une des revendications précédentes, **caractérisé en ce que** l'on établit au moins une région de fusion thermoplastique dans au moins un sous-constituant (12 à 18b) conducteur de l'électricité, des sous-constituants (12 à 18b) assemblés entre eux, dans lequel, par absorption du rayonnement, au moins dans la région de fusion, on obtient une fusion de matière et on assemble solidement entre eux les sous-constituants (12 à 18b) après un refroidissement de la matière.

9. Elément (10) filtrant, comprenant :
- plusieurs sous-constituants (12 à 18b) à assemblés entre eux, dont l'un au moins est en une matière perméable au rayonnement,
- au moins une couche (22, 22') intermédiaire thermoplastique et conductrice de l'électricité entre les sous-constituants (12 à 18b) à assembler ensemble,
- les sous-constituants (12 à 18b) étant assemblés entre eux par l'intermédiaire de la couche (22, 22') intermédiaire,
- **caractérisé en ce que** la couche (22) intermédiaire est disposée saillante dans un espace (24) de montage voisin pour un autre sous-constituant (20) conducteur de l'électricité, afin de s'appliquer à l'autre sous-constituant (20).

10. Elément filtrant suivant la revendication 9, **caractérisé en ce que** l'autre sous-constituant (20) est inséré dans l'espace (24) de montage et la couche (22) intermédiaire ou le sous-constituant s'applique à l'autre sous-constituant (20) avec mise en contact électriquement.

11. Elément filtrant suivant la revendication 9 ou 10, **caractérisé en ce que** la couche (22, 22') intermédiaire est de type en feuille et/ou **en ce que**, sur la couche (22) intermédiaire, est constituée au moins une région (28) de contact, de préférence de type à lèvre, pour l'application, de préférence régulière, à l'autre sous-constituant (20).

12. Elément filtrant suivant l'une des revendications 9 ou 11, **caractérisé en ce que** l'élément filtrant comprend au moins une région de fusion thermoplastique dans au moins un sous-constituant (12 à 18b) conducteur de l'électricité parmi les sous-constituants (12 à 18b) à assembler entre eux, qui sont assemblés entre eux à coopération de matière, par l'intermédiaire de la région de fusion.
